# EUROPEAN PATENT SPECIFICATION

(11) **EP 3 001 084 B1**
(45) Date of publication and mention of the grant of the patent: **05.07.2017**
(21) Application number: 14801898.9
(22) Date of filing: 12.05.2014
(51) Int. Cl.: F16L 11/04, C08K 3/04, C08L 11/00, C08K 3/36, F16L 11/08, F16L 11/127

(54) **RUBBER COMPOSITION FOR HOSES, AND HOSE**
KAUTSCHUKZUSAMMENSETZUNG FÜR SCHLÄUCHE UND SCHLAUCH
COMPOSITION DE CAOUTCHOUC POUR TUYAUX SOUPLES ET TUYAU SOUPLE

(30) Priority: 21.05.2013 JP 2013107066
(43) Date of publication of application: 30.03.2016
(73) Proprietor: Bridgestone Corporation, Tokyo 104-8340 (JP)
(72) Inventor: TSUNENISHI, Youhei, Yokohama-shi Kanagawa 244-8510 (JP)
(74) Representative: Oxley, Robin John George
(86) International application number: PCT/JP2014/002494
(87) International publication number: WO 2014/188676

(56) References cited:
- EP-A1- 1 148 094
- WO-A1-2009/035109
- WO-A1-2012/124442
- JP-A- H10 267 169
- JP-A- 2001 206 986
- JP-A- 2004 002 682
- JP-A- 2005 060 581
- JP-A- 2010 121 006
- JP-A- 2013 129 683
- JP-A- 2013 129 684

## Description

### TECHNICAL FIELD

The disclosure relates to a hose rubber composition and a hose, and particularly relates to a hose rubber composition and hose having improved crack resistance while ensuring flame retardance.

### BACKGROUND

Research has been conventionally conducted to improve the weather resistance, fatigue resistance, abrasion resistance, etc. of hydraulic hoses used in construction machines (for example, see Patent Literature (PTL) 1).

Hydraulic hoses have been increasingly used in mines such as coal mines in recent years, and required to have improved flame retardance for safety during work. For example, flame retardance required of hydraulic hoses is mainly defined by the Mine Safety and Health Administration (MSHA) standard in the United States.

Moreover, with the use of very large hydraulic excavator in recent years, large-diameter high-pressure hoses have been increasingly used in harsher use environments. This has created the tendency to demand hoses with high pressure resistance and long life.

Conventional flame-retardant outer cover rubber is, however, not suitable for long-term use, as an increase in bending stress due to large diameter may cause an outer cover crack after long-term use.

Regarding chloroprene rubber from which vulcanized rubber used in automobile rubber members, hoses, rubber molded objects, and rubber vibration isolators is obtained, research has been conducted to further improve heat resistance without impairing mechanical properties, compression set, and elongation fatigue performance (for example, see PTL 2).

However, rubber having improved crack resistance while ensuring flame retardance has been unavailable.

There has thus been a strong need to develop rubber having improved crack resistance while ensuring flame retardance. WO2012/124442 teaches a chloroprene rubber composition with improved vibration-damping properties. JP2005-060581 discloses a chloroprene rubber composition containing a carbon black, zinc powder and a further organic compound. EP1148094 teaches a chloroprene rubber composition comprising a chloroprene-type rubber, carbon black and a zinc powder.

### CITATION LIST

### Patent Literature

PTL 1: JP 2010-121006 A
PTL 2: WO 2009-035109 A1

### SUMMARY

### (Technical Problem)

It could therefore be helpful to provide a hose rubber composition and hose having improved crack resistance while ensuring flame retardance.

### (Solution to Problem)

We have found that a hose rubber composition including: a rubber component including a specific amount of chloroprene rubber; and a specific amount of specific carbon black has improved crack resistance while ensuring flame retardance.

The disclosed hose rubber composition includes: a rubber component including 70 parts by mass or more chloroprene rubber in 100 parts by mass the rubber component; and 45 parts to 65 parts by mass carbon black with respect to 100 parts by mass the rubber component, and 5 parts to 25 parts by mass silica with respect to 100 parts by mass the rubber component, wherein the carbon black has an iodine adsorption number of 20 mg/g to 100 mg/g, and a DBP oil absorption number of 50 mL/100 g to 150 mL/100 g, and wherein the method of measuring the iodine adsorption number and the method of measuring the DBP oil absorption number comply with JIS K 6217.

The method of measuring the iodine adsorption number and the method of measuring the DBP oil absorption number comply with JIS K 6217.

### (Advantageous Effect)

It is thus possible to provide a hose rubber composition and hose having improved crack resistance while ensuring flame retardance.

### BRIEF DESCRIPTION OF THE DRAWINGS

In the accompanying drawing:

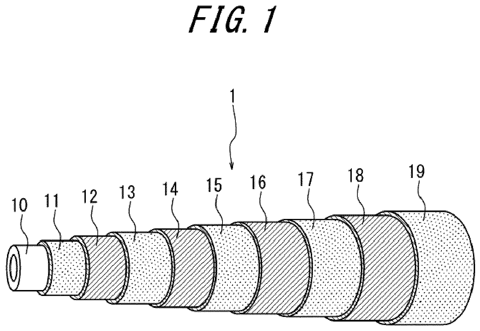

FIG. 1 is a perspective view illustrating an example of the layered structure of a hydraulic hose in which the disclosed hose rubber composition is used.

### DETAILED DESCRIPTION

### (Hose rubber composition)

The disclosed hose rubber composition includes at least a rubber component and carbon black, and further includes silica, a plasticizer, and other components when necessary.

### <Rubber component>

The rubber component includes at least chloroprene rubber (CR), and further includes butadiene rubber (BR), styrene-butadiene rubber (SBR), and other polymers when necessary.

### <<Chloroprene rubber (CR)>>

The chloroprene rubber (CR) is a homopolymer (chloroprene polymer) of a chloroprene monomer, or a copolymer (hereafter referred to as a chloroprene-base polymer) obtained by polymerizing a mixture (hereafter referred to as a chloroprene-base monomer) of a chloroprene monomer and at least one type of other monomer copolymerizable with the chloroprene monomer.

### - Classification of chloroprene rubber

The chloroprene rubber is classified as sulfur-modified type, mercaptan-modified type, or xanthogen-modified type, according to the type of a molecular weight regulator.

The chloroprene rubber may be any of the modified types. The sulfur-modified type is, however, lower in heat resistance of the polymer itself than the mercaptan-modified type and the xanthogen-modified type, and accordingly the mercaptan-modified type or the xanthogen-modified type is preferably used in the case where higher heat resistance is required.

### - Sulfur-modified type

The sulfur-modified type is a type that plasticizes, with thiuram disulfide, a polymer which is the result of copolymerizing sulfur and the chloroprene monomer or the chloroprene-base monomer, and adjusts it to predetermined Mooney viscosity.

### - Mercaptan-modified type

The mercaptan-modified type is a type that uses alkylmercaptan such as n-dodecylmercaptan, tert-dodecylmercaptan, or octylmercaptan as a molecular weight regulator.

### - Xanthogen-modified type

The xanthogen-modified type uses an alkylxanthogen compound as a molecular weight regulator. The alkylxanthogen compound is not particularly limited, and may be selected as appropriate depending on the purpose. Examples include dimethylxanthogen disulfide, diethylxanthogen disulfide, diisopropylxanthogen disulfide, and diisobutylxanthogen disulfide. A single type of these may be used, or two or more types may be used in combination.

The amount of the alkylxanthogen compound used is not particularly limited as long as the molecular weight (or Mooney viscosity) of the chloroprene rubber is proper, and may be selected as appropriate depending on the purpose (the structure of the alkyl group or the target molecular weight). The amount of the alkylxanthogen compound used is preferably 0.05 parts to 5.0 parts by mass and more preferably 0.3 parts to 1.0 parts by mass with respect to 100 parts by mass the chloroprene monomer or the chloroprene-base monomer.

### - Content of chloroprene rubber (CR)

The content of the chloroprene rubber (CR) is not particularly limited as long as it is 70 parts by mass or more in 100 parts by mass the rubber component, and may be selected as appropriate depending on the purpose. The content of the chloroprene rubber (CR) is preferably 70 parts to 90 parts by mass, and more preferably 75 parts to 85 parts by mass.

When the content of the chloroprene rubber (CR) is less than 70 parts by mass in 100 parts by mass the rubber component, flame retardance cannot be ensured. The content of the chloroprene rubber (CR) within the above-mentioned preferable range is advantageous in terms of flame retardance, and the content of the chloroprene rubber (CR) within the above-mentioned more preferable range is more advantageous in terms of flame retardance.

### <<Butadiene rubber (BR)>>

The butadiene rubber (BR) is a homopolymer (butadiene polymer) of a butadiene monomer, or a copolymer (hereafter referred to as a butadiene-base polymer) obtained by polymerizing a mixture (hereafter referred to as a butadiene-base monomer) of a butadiene monomer and at least one type of other monomer copolymerizable with the butadiene monomer.

The inclusion of the butadiene rubber (BR) improves workability (reduces tackiness during work).

### - Cis-1,4 bond content of butadiene rubber (BR)

The cis-1,4 bond content of the butadiene rubber (BR) is not particularly limited, and may be selected as appropriate depending on the purpose. The cis-1,4 bond content is preferably 90% or more, more preferably 93% or more, and particularly preferably 95% or more.

When the cis-1,4 bond content is less than 90%, sufficient effect of preventing a decrease in abrasion resistance may not be attained. The cis-1,4 bond content within the above-mentioned more preferable range is advantageous in terms of abrasion resistance, and the cis-1,4 bond content within the above-mentioned particularly preferable range is more advantageous in terms of abrasion resistance.

The cis-1,4 bond content may be measured using ¹H-NMR, ¹³C-NMR, FT-IR.

### - Content of butadiene rubber (BR)

The content of the butadiene rubber (BR) is not particularly limited, and may be selected as appropriate depending on the purpose. The content of the butadiene rubber (BR) is preferably 5 parts to 15 parts by mass in 100 parts by mass the rubber component.

When the content of the butadiene rubber (BR) is less than 5 parts by mass in 100 parts by mass the rubber component, sufficient effect of preventing a decrease in abrasion resistance may not be attained, and sufficient effect of improving workability (reducing tackiness during work) may not be attained. When the content of the butadiene rubber (BR) exceeds 15 parts by mass in 100 parts by mass the rubber component, the SBR ratio declines, which may degrade extruded surface characteristics.

### <<Styrene-butadiene rubber (SBR)>>

The styrene-butadiene rubber (SBR) is a copolymer (styrene-butadiene copolymer) of a styrene monomer and a butadiene monomer, or a copolymer (hereafter referred to as a styrene-butadiene-base copolymer) obtained by polymerizing a mixture (hereafter referred to as a styrene-butadiene-base monomer) of a styrene monomer, a butadiene monomer, and at least one type of other monomer copolymerizable with the styrene monomer and the butadiene monomer.

The inclusion of the styrene-butadiene rubber (SBR) improves workability (rolled surface characteristics).

The disclosed hose rubber composition preferably further includes the butadiene rubber and the styrene-butadiene rubber as the rubber component.

The inclusion of the butadiene rubber and the styrene-butadiene rubber as the rubber component prevents a decrease in abrasion resistance of the hose rubber composition, and also improves workability (reduction in tackiness during work, improvement in extruded surface characteristics).

### - Monomer copolymerizable with styrene monomer and butadiene monomer

The monomer copolymerizable with the styrene monomer and the butadiene monomer is not particularly limited, and may be selected as appropriate depending on the purpose. Examples include: conjugated diene monomers having 5 to 8 carbon atoms such as 2-methyl-1,3-butadiene, 2,3-dimethyl-1,3-butadiene, 1,3-pentadiene, and 1,3-hexadiene; and aromatic vinyl monomers such as p-methylstyrene, α-methylstyrene, and vinylnaphthalene. A single type of these may be used, or two or more types may be used in combination.

### - Styrene content of styrene-butadiene rubber (SBR)

The styrene content of the styrene-butadiene rubber (SBR) is not particularly limited, and may be selected as appropriate depending on the purpose. The styrene content of the styrene-butadiene rubber (SBR) is preferably 20% to 45% by mass, and more preferably 20% to 35% by mass.

When the styrene content of the styrene-butadiene rubber (SBR) is less than 20% by mass, sufficient effect of preventing a decrease in workability may not be attained. When the styrene content of the styrene-butadiene rubber (SBR) exceeds 45% by mass, sufficient effect of preventing a decrease in abrasion resistance may not be attained. The styrene content of the styrene-butadiene rubber (SBR) within the above-mentioned more preferable range is advantageous in terms of workability and abrasion resistance.

### - Content of styrene-butadiene rubber (SBR)

The content of the styrene-butadiene rubber (SBR) is not particularly limited, and may be selected as appropriate depending on the purpose. The content of the styrene-butadiene rubber (SBR) is preferably 5 parts to 25 parts by mass and more preferably 10 parts to 20 parts by mass in 100 parts by mass the rubber component.

When the content of the styrene-butadiene rubber (SBR) is less than 5 parts by mass in 100 parts by mass the rubber component, sufficient effect of improving workability (rolled surface characteristics) may not be attained. When the content of the styrene-butadiene rubber (SBR) exceeds 25 parts by mass in 100 parts by mass the rubber component, sufficient abrasion resistance may not be attained due to a decline in BR ratio. The content of the styrene-butadiene rubber (SBR) within the above-mentioned more preferable range is advantageous in terms of extrusion workability and extruded surface characteristics.

The rubber component preferably further includes the butadiene rubber and the styrene-butadiene rubber, and more preferably includes 5 parts to 15 parts by mass the butadiene rubber and 5 parts to 25 parts by mass the styrene-butadiene rubber in 100 parts by mass the rubber component.

The inclusion of the butadiene rubber and the styrene-butadiene rubber in the rubber component prevents a decrease in abrasion resistance of the hose rubber composition, and improves workability (reduction in adhesion during work, improvement in extruded surface characteristics).

The inclusion of 5 parts to 15 parts by mass the butadiene rubber and 5 parts to 25 parts by mass the styrene-butadiene rubber in 100 parts by mass the rubber component prevents a decrease in abrasion resistance of the hose rubber composition, and effectively improves workability.

### <<Mass ratio of butadiene rubber (BR)/styrene-butadiene rubber (SBR)>>

The mass ratio of the butadiene rubber (BR)/the styrene-butadiene rubber (SBR) is not particularly limited, and may be selected as appropriate depending on the purpose. The mass ratio is preferably 10/30 to 30/10, and more preferably 15/25 to 15/15.

When the mass ratio is less than 10/30, sufficient effect of preventing a decrease in abrasion resistance may not be attained. When the mass ratio exceeds 30/10, sufficient effect of improving workability may not be attained.

### <<Other polymers>>

The other polymers are not particularly limited, and may be selected as appropriate depending on the purpose. Examples include natural rubber, chlorosulfonated polyethylene (CSM), chlorinated polyethylene (CPE), nitrile rubber (NBR), hydrogenated acrylonitrile-butadiene rubber (H-NBR), acrylic rubber (ACM), ethylene-propylene rubber (EPDM), epichlorohydrin rubber (CO), hydrin rubber (ECO), silicone rubber (Q), and fluororubber (FKM). A single type of these may be used, or two or more types may be used in combination.

Of these, CSM and CPE are preferable in terms of flame retardance.

### <Carbon black>

A specific amount of the carbon black having an iodine adsorption number of 20 mg/g to 100 mg/g and a DBP oil absorption number of 50 mL/100 g to 150 mL/100 g is blended with the rubber component, with it being possible to ensure reinforcing performance and flame retardance.

The carbon black is not particularly limited as long as the iodine adsorption number and the DBP oil absorption number are within the above-mentioned ranges, and may be selected as appropriate depending on the purpose. Examples include FEF class, HAF class, GPF class, and SRF class. For example, carbon black composed of only FT class or MT class (an iodine adsorption number of less than 35 mg/g and a DBP oil absorption number of less than 45 mL/100 g) is excluded. A single type of these may be used, or two or more types may be used in combination.

Of these, FEF class (an iodine adsorption number of 40 mg/g to 60 mg/g (g/kg) and a DBP oil absorption number of 100 mL/100 g to 130 mL/100 g (100 × 10⁻⁵ m³/kg to 130 × 10⁻⁵ m³/kg) is desirable in terms of balance between abrasion resistance, elongation after heat-aging resistance (crack resistance), and workability.

The iodine adsorption number of the carbon black is not particularly limited as long as it is 20 mg/g to 100 mg/gm, and may be selected as appropriate depending on the purpose. The iodine adsorption number of the carbon black is preferably 35 mg/g to 70 mg/g, and more preferably 40 mg/g to 60 mg/g.

When the iodine adsorption number of the carbon black is less than 20 mg/g, a decrease in abrasion resistance cannot be prevented. When the iodine adsorption number of the carbon black exceeds 100 mg/g, workability cannot be ensured, and also elongation after heat-aging resistance cannot be ensured. The iodine adsorption number of the carbon black within the above-mentioned preferable range is advantageous in terms of balance between abrasion resistance, workability, and elongation after aging, and the iodine adsorption number of the carbon black within the above-mentioned more preferable range is more advantageous in terms of balance between abrasion resistance, workability, and elongation after aging.

The DBP oil absorption number of the carbon black is not particularly limited as long as it is 50 mL/100 g to 150 mL/100 g, and may be selected as appropriate depending on the purpose. The DBP oil absorption number of the carbon black is preferably 75 mL/100 g to 140 mL/100 g, and more preferably 100 mL/100 g to 130 mL/100 g.

When the DBP oil absorption number of the carbon black is less than 50 mL/100 g, a decrease in abrasion resistance cannot be prevented. When the DBP oil absorption number of the carbon black exceeds 150 mL/100 g, workability cannot be ensured, and also elongation after heat-aging resistance cannot be ensured. The DBP oil absorption number of the carbon black within the above-mentioned preferable range is advantageous in terms of balance between abrasion resistance, workability, and elongation after aging, and the DBP oil absorption number of the carbon black within the above-mentioned more preferable range is more advantageous in terms of balance between abrasion resistance, workability, and elongation after aging.

In the disclosed hose rubber composition, the carbon black preferably has an iodine adsorption number of 40 mg/g to 60 mg/g and a DBP oil absorption number of 100 mL/100 g to 130 mL/100 g.

When the carbon black has an iodine adsorption number of 40 mg/g to 60 mg/g and a DBP oil absorption number of 100 mL/100 g to 130 mL/100 g, the flame retardance of the hose rubber composition can be ensured, the elongation after heat-aging resistance of the hose rubber composition can be further increased, and also abrasion resistance and workability can be ensured.

### - Content of carbon black

The content of the carbon black is not particularly limited as long as it is 45 parts to 65 parts by mass with respect to 100 parts by mass the rubber component, and may be selected as appropriate depending on the purpose. The content of the carbon black is preferably 45 parts to 60 parts by mass and more preferably 45 parts to 55 parts by mass with respect to 100 parts by mass the rubber component.

When the content of the carbon black is less than 45 parts by mass with respect to 100 parts by mass the rubber component, flame retardance cannot be ensured. When the content of the carbon black exceeds 65 parts by mass, elongation after heat-aging resistance (crack resistance) cannot be improved. The content of the carbon black within the above-mentioned preferable range is advantageous in terms of flame retardance and elongation after heat-aging resistance (crack resistance), and the content of the carbon black within the above-mentioned more preferable range is more advantageous in terms of flame retardance and elongation after heat-aging resistance (crack resistance).

When the content of the carbon black is 45 parts to 60 parts by mass with respect to 100 parts by mass the rubber component, the elongation after heat-aging resistance of the hose rubber composition can be further increased while developing flame retardance.

### <Silica>

Adding the silica to the hose rubber composition improves flame retardance (in particular, shortens afterglow response), improves workability, and enhances reinforcing performance to improve abrasion resistance.

The nitrogen adsorption specific surface area (N₂SA) of the silica is not particularly limited, and may be selected as appropriate depending on the purpose. The nitrogen adsorption specific surface area (N₂SA) of the silica is preferably 70 m²/g to 300 m²/g, more preferably 100 m²/g to 280 m²/g, and particularly preferably 150 m²/g to 250 m²/g.

When the nitrogen adsorption specific surface area (N₂SA) of the silica is less than 70 m²/g, sufficient effect of improving flame retardance and abrasion resistance may not be attained. When the nitrogen adsorption specific surface area (N₂SA) of the silica exceeds 300 m²/g, sufficient effect of improving dispersibility and workability may not be attained. The nitrogen adsorption specific surface area (N₂SA) of the silica within the above-mentioned more preferable range is advantageous in terms of balance between flame retardance, abrasion resistance, and workability, and the nitrogen adsorption specific surface area (N₂SA) of the silica within the above-mentioned particularly preferable range is more advantageous in terms of balance between flame retardance, abrasion resistance, and workability.

### - Content of silica

The content of the silica is 5 parts to 25 parts by mass and preferably 15 parts to 25 parts by mass with respect to 100 parts by mass the rubber component.

When the content of the silica is less than 5 parts by mass, flame retardance may decrease (afterglow response may increase). When the content of the silica exceeds 25 parts by mass, abrasion resistance may decrease. The content of the silica within the above-mentioned more preferable range is advantageous in terms of workability (dimensional stability of extrusion, extruded surface characteristics), in the blending ratio of each component.

In other words, by blending 5 parts to 25 parts by mass the silica with respect to 100 parts by mass the rubber component, flame retardance can be improved (in particular, afterglow response can be shortened), and workability (dimensional stability of extrusion, extruded surface characteristics) can be improved.

### <Plasticizer>

Adding the plasticizer to the hose rubber composition improves elongation after heat-aging resistance (crack resistance).

The plasticizer is not particularly limited, and may be selected as appropriate depending on the purpose. Examples include paraffin-base oil, aroma-base oil, naphthene-base oil, and ester-base oil. A single type of these may be used, or two or more types may be used in combination.

A mixture of spindle oil (mainly containing paraffin-base oil) and aroma oil (mainly containing aroma-base oil) is particularly preferable. The mix ratio of the mixture of the spindle oil and the aroma oil (the mass of the spindle oil/the mass of the aroma oil) is not particularly limited, and may be selected as appropriate depending on the purpose. The mix ratio is preferably 1/2 to 1/1.

When the mix ratio is less than 1/2, sufficient effect of preventing an increase in tackiness during work may not be attained. When the mix ratio exceeds 1/1, heat resistance may decrease.

### - Content of plasticizer

The content of the plasticizer is not particularly limited, and may be selected as appropriate depending on the purpose. The content of the plasticizer is preferably 20 parts by mass or less, more preferably 5 parts to 20 parts by mass, and particularly preferably 10 parts to 15 parts by mass with respect to 100 parts by mass the rubber component.

When the content of the plasticizer exceeds 20 parts by mass with respect to 100 parts by mass the rubber component, flame retardance may decrease. The content of the plasticizer within the above-mentioned more preferable range is advantageous in terms of balance between flame retardance, elongation after heat-aging resistance (crack resistance), and workability, and the content of the plasticizer within the above-mentioned particularly preferable range is more advantageous in terms of balance between flame retardance, elongation after heat-aging resistance (crack resistance), and workability.

In other words, by blending 20 parts by mass or less the plasticizer with respect to 100 parts by mass the rubber component, favorable balance between flame retardance, crack resistance, and workability can be achieved.

### <Other components>

As the other components, compounding agents typically used in the rubber industry may be selected as appropriate and blended within the range that does not interfere with the object of the disclosure. Examples include: fillers other than carbon black and silica; vulcanizers; vulcanization acceleration aids such as zinc oxide and stearic acid; antioxidants; scorch retarders; softeners; adhesive aids such as silane coupling agent, organic acid cobalt, resorcin, hexamethylenetetramine, and melamine resin; and hydroxide metal compounds such as aluminum hydroxide and magnesium hydroxide. Commercial products may be suitably used as these compounding agents. The rubber composition can be manufactured by blending the rubber component with the above-mentioned compounding agents selected as appropriate when necessary, and performing mixing, warming up, extruding, etc.

The disclosed hose rubber composition includes: a rubber component including 70 parts by mass or more chloroprene rubber in 100 parts by mass the rubber component; and 45 parts to 65 parts by mass carbon black with respect to 100 parts by mass the rubber component, and 5 parts to 25 parts by mass silica with respect to 100 parts by mass the rubber component, wherein the carbon black has an iodine adsorption number of 20 mg/g to 100 mg/g, and a DBP oil absorption number of 50 mL/100 g to 150 mL/100 g, and wherein the method of measuring the iodine adsorption number and the method of measuring the DBP oil absorption number comply with JIS K 6217. Such a hose rubber composition has increased elongation after heat-aging resistance and so has improved crack resistance, while ensuring flame retardance.

### (Hose)

The disclosed hose includes at least a rubber layer, and further includes one or more rubber layers other than the rubber layer and other members when necessary.

The hose including the rubber layer in which the hose rubber composition is used has improved crack resistance while ensuring flame retardance.

### - Rubber layer

The rubber layer is made of the disclosed hose rubber composition. The part of the hose to which the rubber layer is applied is not particularly limited, and may be selected as appropriate depending on the purpose. For example, the part may be an intermediate rubber layer not forming the inner or outer surface of the hose and/or an outer surface rubber layer (outer cover rubber layer) forming the outer surface of the hose. The rubber layer is particularly preferably the outer surface rubber layer.

The shape, structure, and size of the outer surface rubber layer are not particularly limited, and may be selected as appropriate depending on the purpose.

The thickness of the outer surface rubber layer is not particularly limited, and may be selected as appropriate depending on the purpose. The thickness of the outer surface rubber layer is preferably 0.3 mm to 3.5 mm, more preferably 0.7 mm to 3.2 mm, and particularly preferably 1.0 mm to 3.0 mm.

When the thickness of the rubber layer is less than 0.3 mm, abrasion may cause shorter life. When the thickness of the rubber layer exceeds 3.5 mm, an increased amount of fuel component may cause lower flame retardance, or the flexibility, lightweight property, or space saving property of the hose may degrade. The thickness of the rubber layer within the above-mentioned more preferable range is advantageous in terms of flame retardance and abrasion life, and the thickness of the rubber layer within the above-mentioned particularly preferable range is more advantageous in terms of flame retardance and abrasion life.

For example, the hose includes an inner surface rubber layer 10, reinforcing layers 12, 14, 16, and 18 having brass-plated wires, intermediate rubber layers 11, 13, 15, and 17, and an outer surface rubber layer 19, as illustrated in FIG. 1.

The disclosed hose rubber composition is suitable for use in the outer surface rubber layer 19.

Although the structure of the hose illustrated here is made up of a plurality of layers by arranging the inner surface rubber layer 10, the four reinforcing layers 12, 14, 16, and 18, the four intermediate rubber layers 11, 13, 15, and 17, and the outer surface rubber layer 19 from inside, this is not a limitation. For example, the hose may have a three-layer structure in which an inner surface rubber layer, a reinforcing layer, and an outer surface rubber layer are stacked in order. The structure of the hose may be selected as appropriate depending on the required characteristics of the hose. Besides, the reinforcing layers need not be all made of brass-plated wires, and part of the reinforcing layers may be made of organic fibers. The hose may have a resin layer such as ultra high molecular weight polyethylene in its outermost layer to improve abrasion resistance.

### <Method of manufacturing hose>

The method of manufacturing the disclosed hose includes, for example, the following inner tube extrusion step, wrapping step, outer cover extrusion step, resin mold coating step, vulcanization step, resin mold peeling step, and mandrel removal step, and further includes other steps selected as appropriate when necessary.

First, a rubber composition for the inner surface rubber layer 10 is extruded onto the outside of a core body (mandrel) whose diameter is substantially the same as the hose inner diameter to coat the mandrel, thus forming the inner surface rubber layer 10 (inner tube extrusion step). A layer made of organic fibers may be introduced on the inner tube rubber layer 10, to prevent irregular winding when braiding wires. Next, a predetermined number of brass-plated wires are braided on the outside of the inner surface rubber layer 10 formed in the inner tube extrusion step to form the reinforcing layer 12 (braiding step), and a sheet of the disclosed hose rubber composition is inserted inside the reinforcing layer 12 to form the intermediate rubber layer 11. This is repeated a plurality of times to stack the reinforcing layers 14, 16, and 18 and the intermediate rubber layers 13, 15, and 17 in sequence. The outer surface rubber layer 19 made of the disclosed hose rubber composition is then formed (outer cover extrusion step). The outside of the outer surface rubber layer 19 formed in the outer cover extrusion step is coated with a suitable resin as appropriate (resin mold coating step), and the structure is vulcanized under predetermined conditions (vulcanization step). After the vulcanization, the coating resin is peeled away (resin mold peeling step), and the mandrel is removed (mandrel removal step). This produces the hose having the intermediate rubber layers 11, 13, 15, and 17 and the reinforcing layers 12, 14, 16, and 18 between the inner surface rubber layer 10 and the outer surface rubber layer 19.

### EXAMPLES

The following describes non-limiting examples according to the disclosure.

The polymers and rubber compositions described below were prepared. The methods of evaluating the rubber compositions are as follows. The unit of the values shown as the blending quantities in Tables 1 to 3 is parts by mass. In Tables 1 to 3, the rubber composition of each of the examples and comparative examples includes (i) 5 parts by mass zinc flower, (ii) 4 parts by mass magnesium oxide, (iii) 2 parts by mass wax (OZOACE-0017, manufactured by Nippon Seiro Co., Ltd.), (iv) 3 parts by mass an antioxidant (ANTIGENE6C, manufactured by Sumitomo Chemical Co., Ltd.), (v) 2 parts by mass cobalt stearate, (vi) 1 part by mass sulfur, and (vii) 2 parts by mass a vulcanization accelerator (NS), with respect to 100 parts by mass the rubber composition.

### <Method of evaluating rubber composition>

### (1) Flame retardance (flame response)

The flame retardance (flame response) was evaluated based on the flame retardance (flame response) evaluation of ASTP 5007 in the Mine Safety and Health Administration (MSHA) standard in the United States. The thickness of each evaluation sample obtained by press-vulcanizing a rubber sheet in a mold at 150 °C for 60 minutes and cutting it to predetermined dimensions was 3 mm.

The evaluation results are shown in Tables 1 to 3. A smaller value as the flame response indicates better flame retardance.

The evaluation criteria are as follows.
Excellent: 0 second or more and 10 seconds or less
Good: more than 10 seconds and 30 seconds or less
Poor: more than 30 seconds and 60 seconds or less
Very poor: more than 60 seconds

### (2) Flame retardance (afterglow response)

The flame retardance (afterglow response) was evaluated based on the flame retardance (afterglow response) evaluation in the Mine Safety and Health Administration (MSHA) standard. The thickness of each evaluation sample obtained by press-vulcanizing a rubber sheet in a mold at 150 °C for 60 minutes and cutting it to predetermined dimensions was 3 mm.

The evaluation results are shown in Tables 1 to 3. A smaller value as the afterglow response indicates better flame retardance.

The evaluation criteria are as follows.
Excellent: 0 second or more and 90 seconds or less
Good: more than 90 seconds and 180 seconds or less
Poor: more than 180 seconds

### (3) Abrasion resistance (DIN abrasion loss)

The abrasion resistance (DIN abrasion loss) was measured in compliance with JIS K 6264.

The evaluation results (indexes where Comparative Example 1 is 100) are shown in Tables 1 to 3. A smaller value as the abrasion resistance (DIN abrasion loss) is better. Each evaluation sample was obtained by stamping predetermined dimensions out of a rubber sheet vulcanized at 150 °C for 60 minutes.

### (4) Initial elongation (initial Eb (%))

The initial elongation (initial Eb (%)) was measured with a No. 3 dumbbell according to JIS K 6251.

The measurement results are shown in Tables 1 to 3. A larger value as the initial elongation (initial Eb (%)) is better as crack resistance is improved.

### (5) Elongation after heat-aging resistance (Eb after aging (%))

The elongation after heat-aging resistance (Eb after aging (%)) was measured with a No. 3 dumbbell according to JIS K 6257 A-2, after each evaluation sample was heat-treated at 100 °C for 144 hours.

The measurement results are shown in Tables 1 to 3. A larger value as the elongation after heat-aging resistance (Eb after aging (%)) is better as crack resistance is improved. The elongation after heat-aging resistance (Eb after aging (%)) is preferably 150% or more, more preferably 180% or more, and further preferably 200% or more.

**[Table 1]**

| | | Com.Ex. 1 | Com.Ex. 2 | Com.Ex. 3 | Com.Ex. 4 | Com.Ex. 5 | Com.Ex. 6 | Com.Ex. 7 | Com.Ex. 8 | Com.Ex. 9 | Com.Ex. 10 | Com.Ex. 11 | Com.Ex. 12 |
|---|---|---|---|---|---|---|---|---|---|---|---|---|---|
| Polymer | Chloroprene rubber (CR)^{*1} | 50 | 60 | 65 | 65 | 65 | 65 | 65 | 75 | 75 | 75 | 75 | 75 |
| | Butadiene rubber (BR)^{*2} | 25 | 20 | 20 | 20 | 20 | 20 | 20 | 10 | 10 | 10 | 10 | 10 |
| | Styrene-butadiene rubber (SBR)^{*3} | 25 | 20 | 15 | 15 | 15 | 15 | 15 | 15 | 15 | 15 | 15 | 15 |
| Filler | FEF carbon black^{*4} | 75 | 75 | 75 | 65 | 60 | 50 | 45 | 70 | 40 | - | - | - |
| | FT carbon black^{*5} | - | - | - | - | - | - | - | - | - | - | - | - |
| | HAF carbon black^{*6} | - | - | - | - | - | - | - | - | - | 75 | 70 | 40 |
| | GPF carbon black^{*7} | - | - | - | - | - | - | - | - | - | - | - | - |
| | SRF carbon black^{*8} | - | - | - | - | - | - | - | - | - | - | - | - |
| | Silica^{*9} | 10 | 10 | 10 | 10 | 10 | 10 | 10 | 10 | 10 | 20 | 20 | 20 |
| Plasticizer | Spindle oil^{*10} | 5 | 5 | 5 | 5 | 5 | 5 | 5 | 5 | 5 | 5 | 5 | 5 |
| | Aroma oil^{*11} | 7.5 | 7.5 | 7.5 | 7.5 | 7.5 | 7.5 | 7.5 | 7.5 | 7.5 | 7.5 | 7.5 | 7.5 |
| Evaluation | Flame response (evaluation result) | Very poor | Good | Excellent | Very poor | Very poor | Very poor | Very poor | Excellent | Very poor | Excellent | Excellent | Very poor |
| | Flame response (seconds) | 110 | 30 | 4 | 80 | 137 | 183 | 210 | 5 | 124 | 3 | 2 | 105 |
| | Afterglow response (evaluation result) | Excellent | Excellent | Excellent | Excellent | Excellent | Excellent | Excellent | Excellent | Excellent | Excellent | Excellent | Excellent |
| | Afterglow response (seconds) | 15 | 22 | 17 | 54 | 60 | 68 | 85 | 10 | 14 | 8 | 12 | 35 |
| | DIN abrasion loss (index) | 100 | 105 | 106 | 109 | 103 | 99 | 110 | 108 | 130 | 80 | 82 | 95 |
| | Initial Eb (%) | 230 | 230 | 220 | 260 | 300 | 420 | 470 | 250 | 530 | 180 | 220 | 450 |
| | Eb after aging (%) | 130 | 140 | 130 | 150 | 170 | 240 | 270 | 140 | 280 | 110 | 130 | 230 |

**[Table 2]**

| | | Ex. 1 | Ex. 2 | Ex. 3 | Ex. 4 | Ex. 5 | Ex. 6 | Ex. 7 | Ex. 8 | Com.Ex. 13 | Ex. 9 |
|---|---|---|---|---|---|---|---|---|---|---|---|
| Polymer | Chloroprene rubber (CR)*1 | 70 | 75 | 75 | 75 | 75 | 75 | 75 | 75 | 75 | 75 |
| | Butadiene rubber (BR)*2 | 15 | 10 | 10 | 10 | 10 | 10 | 10 | 10 | 10 | 10 |
| | Styrene-butadiene rubber (SBR)*3 | 15 | 15 | 15 | 15 | 15 | 15 | 15 | 15 | 15 | 15 |
| Filler | FEF carbon black^{*4} | 50 | 50 | 50 | 50 | 45 | 50 | 60 | 65 | - | 30 |
| | FT carbon black^{*5} | - | - | - | - | - | - | - | - | 50 | - |
| | HAF carbon black^{*6} | - | - | - | - | - | - | - | - | - | 30 |
| | GPF carbon black^{*7} | - | - | - | - | - | - | - | - | - | - |
| | SRF carbon black^{*8} | - | - | - | - | - | - | - | - | - | - |
| | Silica^{*9} | 10 | 5 | 20 | 20 | 10 | 10 | 10 | 10 | 20 | 20 |
| Plasticizer | Spindle oil^{*10} | 5 | 5 | 5 | 10 | 5 | 5 | 5 | 5 | 5 | 5 |
| | Aroma oil^{*11} | 7.5 | 7.5 | 7.5 | 10 | 7.5 | 7.5 | 7.5 | 7.5 | 7.5 | 7.5 |
| Evaluation | Flame response (evaluation result) | Good | Excellent | Excellent | Good | Good | Excellent | Excellent | Excellent | Poor | Excellent |
| | Flame response (seconds) | 20 | 3 | 3 | 18 | 23 | 3 | 2 | 3 | 60 | 4 |
| | Afterglow response (evaluation result) | Excellent | Good | Excellent | Good | Excellent | Excellent | Excellent | Excellent | Good | Excellent |
| | Afterglow response (seconds) | 35 | 150 | 26 | 95 | 51 | 45 | 23 | 16 | 155 | 35 |
| | DIN abrasion loss (index) | 97 | 94 | 107 | 110 | 107 | 105 | 101 | 105 | 190 | 90 |
| | Initial Eb (%) | 410 | 450 | 430 | 470 | 460 | 420 | 330 | 280 | 480 | 310 |
| | Eb after aging (%) | 250 | 250 | 240 | 270 | 250 | 240 | 200 | 160 | 280 | 190 |

**[Table 3]**

| | | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|
| Polymer | Chloroprene rubber (CR)^{*1} | 75 | 75 | 75 | 75 | 75 | 75 | 80 | 90 | 100 | 100 | 100 |
| | Butadiene rubber (BR)^{*2} | 10 | 10 | 10 | 10 | 10 | 10 | 10 | 5 | - | - | - |
| | Styrene-butadiene rubber (SBR)^{*3} | 15 | 15 | 15 | 15 | 15 | 15 | 10 | 5 | - | - | - |
| Filler | FEF carbon black^{*4} | - | - | - | - | - | - | 50 | 50 | 45 | 50 | 65 |
| | FT carbon black^{*5} | - | - | - | - | - | - | - | - | - | - | - |
| | HAF carbon black ^{*6} | 45 | 50 | 60 | 65 | - | - | - | - | - | - | - |
| | GPF carbon black ^{*7} | - | - | - | - | 65 | - | - | - | - | - | - |
| | SRF carbon black^{*8} | - | - | - | - | - | 65 | - | - | - | - | - |
| | Silica^{*9} | 20 | 20 | 20 | 20 | 20 | 20 | 10 | 10 | 10 | 10 | 10 |
| Plasticizer | Spindle oil^{*10} | 5 | 5 | 5 | 5 | 5 | 5 | 5 | 5 | 5 | 5 | 5 |
| | Aroma oil^{*11} | 7.5 | 7.5 | 7.5 | 7.5 | 7.5 | 7.5 | 7.5 | 7.5 | 7.5 | 7.5 | 7.5 |
| Evaluation | Flame response (evaluation result) | Good | Excellent | Excellent | Excellent | Good | Good | Excellent | Excellent | Excellent | Excellent | Excellent |
| | Flame response (seconds) | 15 | 8 | 3 | 2 | 12 | 16 | 1 | 1 | 1 | 0 | 0 |
| | Afterglow response (evaluation result) | Excellent | Excellent | Excellent | Excellent | Excellent | Excellent | Excellent | Excellent | Excellent | Excellent | Excellent |
| | Afterglow response (seconds) | 45 | 38 | 27 | 22 | 64 | 87 | 35 | 20 | 36 | 26 | 18 |
| | DIN abrasion loss (index) | 87 | 80 | 79 | 83 | 120 | 155 | 107 | 106 | 113 | 110 | 107 |
| | Initial Eb (%) | 370 | 330 | 300 | 260 | 320 | 360 | 410 | 400 | 420 | 390 | 270 |
| | Eb after aging (%) | 230 | 200 | 180 | 160 | 190 | 210 | 230 | 230 | 250 | 230 | 160 |

| | | | | | | | | | | | | |
|---|---|---|---|---|---|---|---|---|---|---|---|---|
| *1 to *11 in Tables 1 to 3 denote the following. *1 Chloroprene rubber (CR): manufactured by Denki Kagaku Kogyo Kabushiki Kaisha, DENKA chloroprene "M40" *2 Butadiene rubber (BR): manufactured by JSR Corporation, "BR01" (cis-1,4 bond content: 95%) *3 Styrene-butadiene rubber (SBR): manufactured by JSR Corporation, "JSR 1500" *4 FEF carbon black: manufactured by Asahi Carbon Co., Ltd., "Asahi #65": iodine adsorption number of 43 mg/g, DBP oil absorption number of 121 mL/100 g *5 FT carbon black: manufactured by Asahi Carbon Co., Ltd., "Asahi Thermal": iodine adsorption number of 27 mg/g, DBP oil absorption number of 28 mL/100 g *6 HAF carbon black: manufactured by Asahi Carbon Co., Ltd., "Asahi #70": iodine adsorption number of 82 mg/g, DBP oil absorption number of 102 mL/100g *7 GPF carbon black: manufactured by Asahi Carbon Co., Ltd., "Asahi #55": iodine adsorption number of 36 mg/g, DBP oil absorption number of 90 mL/100 g *8 SRF carbon black: manufactured by Asahi Carbon Co., Ltd., "Asahi #50": iodine adsorption number of 29 mg/g, DBP oil absorption number of 68 mL/100 g *9 Silica: manufactured by Tosoh Silica Corporation, "Nipsil AQ" *10 Spindle oil: manufactured by JX Nippon Oil & Energy Corporation, "Super Oil Y22" *11 Aroma oil: manufactured by Idemitsu Kosan Co., Ltd., "Diana Process Oil AH-58" | | | | | | | | | | | | |

As can be understood from Tables 1 to 3, Examples 1 to 20 in which the hose rubber composition includes: a rubber component including 70 parts by mass or more chloroprene rubber in 100 parts by mass the rubber component; and 45 parts to 65 parts by mass carbon black with respect to 100 parts by mass the rubber component wherein the carbon black has an iodine adsorption number of 20 mg/g to 100 mg/g and a DBP oil absorption number of 50 mL/100 g to 150 mL/100 g have improved crack resistance with elongation after heat-aging resistance of 150% or more while ensuring flame retardance, as compared with Comparative Examples 1 to 13 which do not meet the above-mentioned requirements.

Moreover, the results of Comparative Examples 3 and 6 indicate that merely reducing the content of carbon black causes lower flame retardance (in particular, longer flame response).

### INDUSTRIAL APPLICABILITY

The disclosed hose rubber composition is suitable for use in, for example, an intermediate rubber layer and/or outer surface rubber layer of a hydraulic hose of a hydraulic excavator used in a mine such as a coal mine.

### REFERENCE SIGNS LIST

- 1: hose
- 10: inner surface rubber layer
- 11, 13, 15, 17: intermediate rubber layer
- 12, 14, 16, 18: reinforcing layer
- 19: outer surface rubber layer

## Claims

1. A hose rubber composition comprising:
a rubber component including 70 parts by mass or more chloroprene rubber in 100 parts by mass the rubber component;
45 parts to 65 parts by mass carbon black with respect to 100 parts by mass the rubber component; and
5 parts to 25 parts by mass silica with respect to 100 parts by mass the rubber component,
wherein the carbon black has an iodine adsorption number of 20 mg/g to 100 mg/g, and a DBP oil absorption number of 50 mL/100 g to 150 mL/100 g, and wherein the method of measuring the iodine adsorption number and the method of measuring the DBP oil absorption number comply with JIS K 6217.

2. The hose rubber composition according to claim 1, comprising
45 parts to 60 parts by mass the carbon black with respect to 100 parts by mass the rubber component.

3. The hose rubber composition according to claim 1 or 2,
wherein the carbon black has an iodine adsorption number of 40 mg/g to 60 mg/g, and a DBP oil absorption number of 100 mL/100 g to 130 mL/100 g.

4. The hose rubber composition according to any one of claims 1 to 3,
wherein the rubber composition further includes butadiene rubber and styrene-butadiene rubber.

5. The hose rubber composition according to claim 4,
wherein 5 parts to 15 parts by mass the butadiene rubber and 5 parts to 25 parts by mass the styrene-butadiene rubber are included in 100 parts by mass the rubber component.

6. The hose rubber composition according to any one of claims 1 to 5, further comprising
20 parts by mass or less a plasticizer with respect to 100 parts by mass the rubber component.

7. A hose comprising a rubber layer in which the hose rubber composition according to any one of claims 1 to 6 is used.

## Patentansprüche

1. Schlauchkautschukzusammensetzung umfassend:
eine Kautschukkomponente, die 70 Massenteile oder mehr Chloroprenkautschuk in 100 Massenteilen der Kautschukkomponente umfasst;
45 bis 65 Massenteile Ruß, auf 100 Massenteile der Kautschukkomponente bezogen; und
5 bis 25 Massenteile Siliciumdioxid, auf 100 Massenteile der Kautschukkomponente bezogen,
wobei der Ruß eine Iodadsorptionszahl von 20 mg/g bis 100 mg/g und eine DBP-Ölabsorptionszahl von 50 ml/100 g bis 150 ml/100 g aufweist und wobei das Verfahren zum Messen der Iodadsorptionszahl und das Verfahren zum Messen der DBP-Ölabsorptionszahl JIS K 6217 entsprechen.

2. Schlauchkautschukzusammensetzung nach Anspruch 1, umfassend
45 bis 60 Massenteile Ruß, auf 100 Massenteile der Kautschukkomponente bezogen.

3. Schlauchkautschukzusammensetzung nach Anspruch 1 oder 2,
wobei der Ruß eine Iodadsorptionszahl von 40 mg/g bis 60 mg/g und eine DBP-Ölabsorptionszahl von 100 ml/100 g bis 130 ml/100 g aufweist.

4. Schlauchkautschukzusammensetzung nach einem der Ansprüche 1 bis 3,
wobei die Kautschukzusammensetzung ferner Butadienkautschuk und Styrol-Butadienkautschuk umfasst.

5. Schlauchkautschukzusammensetzung nach Anspruch 4,
wobei 5 bis 15 Massenteile des Butadienkautschuks und 5 bis 25 Massenteile des Styrol-Butadienkautschuks in 100 Massenteilen der Kautschukkomponente integriert sind.

6. Schlauchkautschukzusammensetzung nach einem der Ansprüche 1 bis 5, ferner
20 Massenteile oder weniger eines Weichmachers, auf 100 Masseteile der Kautschukkomponente bezogen, umfassend.

7. Schlauch umfassend eine Kautschukschicht, bei der die Schlauchkautschukzusammensetzung nach einem der Ansprüche 1 bis 6 verwendet wird.

## Revendications

1. Composition de caoutchouc pour tuyau comprenant:
un composant de caoutchouc comprenant 70 parties en masse ou plus de caoutchouc de chloroprène dans 100 parties en masse du composant de caoutchouc;
de 45 parties à 65 parties en masse de noir de carbone par rapport à 100 parties en masse du composant de caoutchouc; et
de 5 parties à 25 parties en masse de silice par rapport à 100 parties en masse du composant de caoutchouc,
le noir de carbone présentant un indice d'adsorption d'iode de 20 mg/g à 100 mg/g, et un indice d'absorption d'huile DBP de 50 ml/100 g à 150 ml/100 g, et le procédé de mesure de l'indice d'adsorption d'iode et le procédé de mesure de l'indice d'absorption d'huile DBP étant conformes à la norme JIS K 6217.

2. Composition de caoutchouc pour tuyau selon la revendication 1, comprenant
de 45 parties à 60 parties en masse de noir de carbone par rapport à 100 parties en masse du composant de caoutchouc.

3. Composition de caoutchouc pour tuyau selon la revendication 1 ou 2,
dans laquelle le noir de carbone présente un indice d'adsorption d'iode de 40 mg/g à 60 mg/g, et un indice d'absorption d'huile DBP de 100 ml/100 g à 130 ml/100 g.

4. Composition de caoutchouc pour tuyau selon l'une quelconque des revendications 1 à 3,
la composition de caoutchouc comprenant en outre du caoutchouc de butadiène et du caoutchouc de styrène-butadiène.

5. Composition de caoutchouc pour tuyau selon la revendication 4,
dans laquelle de 5 parties à 15 parties en masse du caoutchouc de butadiène et de 5 parties à 25 parties en masse du caoutchouc de styrène-butadiène sont comprises dans 100 parties en masse du composant de caoutchouc.

6. Composition de caoutchouc pour tuyau selon l'un quelconque des revendications 1 à 5, comprenant en outre
20 parties en masse ou moins d'un agent plastifiant par rapport à 100 parties en masse du composant de caoutchouc.

7. Tuyau comprenant une couche de caoutchouc dans laquelle la composition de caoutchouc pour tuyau selon l'une quelconque des revendications 1 à 6 est employée.
